# EUROPEAN PATENT APPLICATION

(11) **EP 3 225 644 A1**
(43) Date of publication of application: **04.10.2017**
(21) Application number: 17000585.4
(22) Date of filing: 15.10.2013
(51) Int. Cl.: C08G 59/68, C08L 63/00, C08G 59/24

(54) **CURABLE RESIN COMPOSITION, AND CURED PRODUCT THEREOF**

(30) Priority: 15.10.2012 JP 2012227804; 10.04.2013 JP 2013081989
(62) Divisional of application: 13846734.5
(71) Applicant: Daicel Corporation, Osaka-shi, Osaka 530-0011 (JP)
(72) Inventor: Sakane, Masanori, Hiroshima, 739-0695 (JP)
(74) Representative: Grünecker Patent- und Rechtsanwälte PartG mbB

(57) **Abstract**

It is an object of the present invention to provide a curable resin composition that forms a cured product having both high heat resistance and toughness.

The curable resin composition of the present invention is a curable resin composition comprising a radical polymerizable compound (A), an alicyclic epoxy compound (B), and an acid anhydride (C), or a curable resin composition comprising a radical polymerizable compound (A), an alicyclic epoxy compound (B), and a cationic curing agent (D). These curable resin compositions preferably comprise, as the alicyclic epoxy compound (B), a compound represented by the following formula (b1): 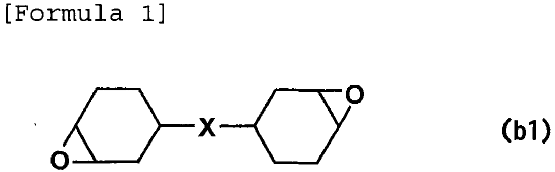 wherein X represents a single bond or a linking group (a divalent group comprising one or more atoms).

## Description

### Technical Field

The present invention relates to a curable resin composition and a cured product (resin cured product) obtained by curing the curable resin composition. This application claims priority to Japanese Patent Application No. 2012-227804 filed in Japan on October 15, 2012, and Japanese Patent Application No. 2013-081989 filed in Japan on April 10, 2013, the contents of which are incorporated herein.

### Background Art

Epoxy resins have excellent thermal properties, mechanical properties, and electrical properties and therefore are used in various applications such as adhesives, paints, electrical and electronic materials, and structural materials. The properties required of such epoxy resins increase year by year, and in recent years, particularly, materials having both high heat resistance and toughness have been required.

Among epoxy resins, alicyclic epoxy resins are known as materials having excellent transparency and heat resistance. However, the alicyclic epoxy resins are brittle, and therefore, when they are used in applications where toughness is required, it is necessary to modify mechanical properties by the blending of an additive, or the like. As means for modifying such alicyclic epoxy resins, for example, means for blending a polyol such as a polyester polyol as a modifier (diluent) into an alicyclic epoxy resin to decrease the crosslinking density of the cured product is known (see Patent Literature 1).

### Citation List

### Patent Literature

Patent Literature 1: Japanese Patent Laid-Open No. 2007-308683

### Summary of Invention

### Technical Problem

However, with the above-described means using a polyol as a modifier, the problem of a significant decrease in the heat resistance of the obtained cured product occurs. Therefore, epoxy resins that can form materials (cured products) having both high heat resistance and toughness are required under the present circumstances.

Therefore, it is an object of the present invention to provide a curable resin composition containing an epoxy compound that forms a cured product (resin cured product) having both high heat resistance and toughness.

In addition, it is another object of the present invention to provide a cured product having both high heat resistance and toughness.

### Solution to Problem

The present inventor has studied diligently in order to solve the above problem, and as a result, found that with a curable resin composition comprising at least a radical polymerizable compound, an alicyclic epoxy compound, and an acid anhydride or a cationic curing agent, a cured product having both high heat resistance and toughness is obtained, thereby completing the present invention.

Specifically, the present invention provides a curable resin composition comprising a radical polymerizable compound (A), an alicyclic epoxy compound (B), and an acid anhydride (C).

In addition, the present invention provides a curable resin composition comprising a radical polymerizable compound (A), an alicyclic epoxy compound (B), and a cationic curing agent (D).

Further, the present invention provides the curable resin composition comprising, as the alicyclic epoxy compound (B), a compound represented by the following formula (b1): 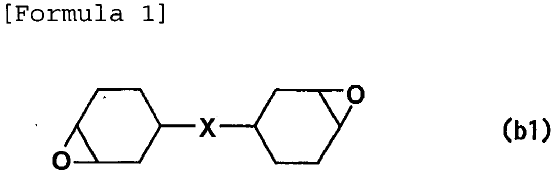 wherein X represents a single bond or a linking group (a divalent group comprising one or more atoms).

Further, the present invention provides the curable resin composition comprising, as the radical polymerizable compounds (A), a compound represented by the following formula (a1): 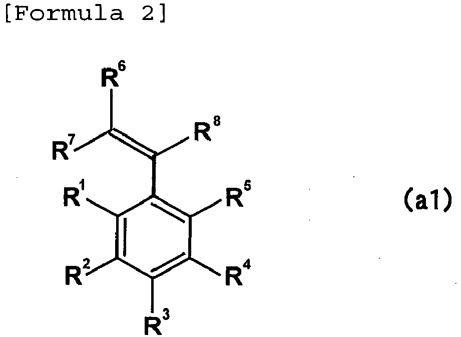 wherein R¹ to R⁵ identically or differently represent a hydrogen atom, a halogen atom, a monovalent organic group, a monovalent oxygen atom-containing group, a monovalent nitrogen atom-containing group, or a monovalent sulfur atom-containing group; two or more selected from R¹ to R⁵ may be bonded to each other to form a ring together with carbon atoms constituting an aromatic ring shown in the formula; and R⁶ to R⁸ identically or differently represent a hydrogen atom, a halogen atom, or an alkyl group, and a compound represented by the following formula (a2) : 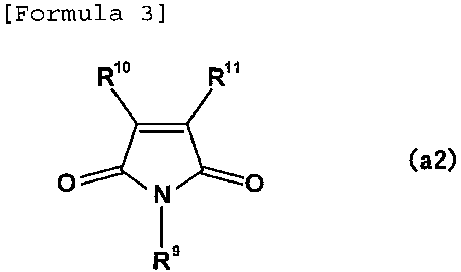 wherein R⁹ identically or differently represents a hydrogen atom, a halogen atom, a monovalent organic group, a monovalent oxygen atom-containing group, a monovalent nitrogen atom-containing group, or a monovalent sulfur atom-containing group; R¹⁰ and R¹¹ identically or differently represent a hydrogen atom, a halogen atom, a monovalent organic group, a monovalent oxygen atom-containing group, a monovalent nitrogen atom-containing group, or a monovalent sulfur atom-containing group; and R¹⁰ and R¹¹ may be bonded to each other to form a ring together with carbon atoms shown in the formula.

Further, the present invention provides the curable resin composition comprising a radical polymerization initiator.

In addition, the present invention provides a cured product obtained by curing the curable resin composition.

Specifically, the present invention relates to the following:
(1) A curable resin composition comprising a radical polymerizable compound (A), an alicyclic epoxy compound (B), and an acid anhydride (C).
(2) A curable resin composition comprising a radical polymerizable compound (A), an alicyclic epoxy compound (B), and a cationic curing agent (D).
(3) The curable resin composition according to (1) or (2) comprising, as the alicyclic epoxy compound (B), a compound represented by the following formula (b1): 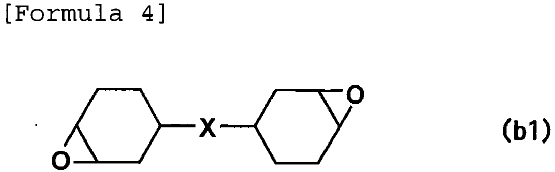 wherein X represents a single bond or a linking group (a divalent group comprising one or more atoms).
(4) The curable resin composition according to any one of (1) to (3) comprising, as the radical polymerizable compounds (A), a compound represented by the following formula (a1): 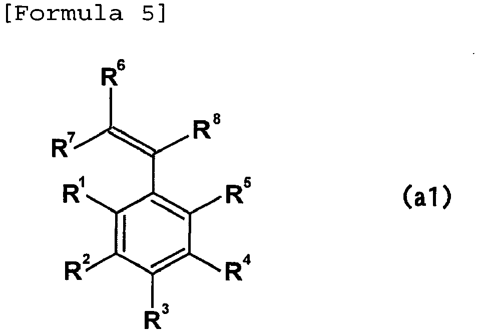 wherein R¹ to R⁵ identically or differently represent a hydrogen atom, a halogen atom, a monovalent organic group, a monovalent oxygen atom-containing group, a monovalent nitrogen atom-containing group, or a monovalent sulfur atom-containing group; two or more selected from R¹ to R⁵ may be bonded to each other to form a ring together with carbon atoms constituting an aromatic ring shown in the formula; and R⁶ to R⁸ identically or differently represent a hydrogen atom, a halogen atom, or an alkyl group, and a compound represented by the following formula (a2) : 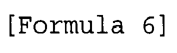 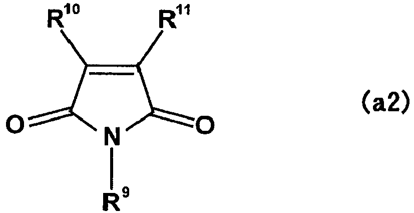 wherein R⁹ identically or differently represents a hydrogen atom, a halogen atom, a monovalent organic group, a monovalent oxygen atom-containing group, a monovalent nitrogen atom-containing group, or a monovalent sulfur atom-containing group; R¹⁰ and R¹¹ identically or differently represent a hydrogen atom, a halogen atom, a monovalent organic group, a monovalent oxygen atom-containing group, a monovalent nitrogen atom-containing group, or a monovalent sulfur atom-containing group; and R¹⁰ and R¹¹ may be bonded to each other to form a ring together with carbon atoms shown in the formula.
(5) The curable resin composition according to (4) comprising, as the radical polymerizable compounds (A), a compound in which R¹ to R⁵ in formula (a1) are each a group having no radical polymerizable functional group, and a compound in which at least one of R¹ to R⁵ in formula (a1) is a vinyl group.
(6) The curable resin composition according to (5), wherein the group having no radical polymerizable functional group is a hydrogen atom, a halogen atom, an alkyl group, a cycloalkyl group, or a hydroxyl group.
(7) The curable resin composition according to (5) or (6), wherein a content of a compound having two or more radical polymerizable functional groups in a molecule (polyfunctional radical polymerizable compound) is 0.1 to 5 mol% based on a total amount (100 mol%) of the radical polymerizable compounds (A).
(8) The curable resin composition according to any one of (1) to (7), wherein the alicyclic epoxy compound (B) is at least one selected from the group consisting of compounds represented by the following formulas (b1=1) to (b1-10): 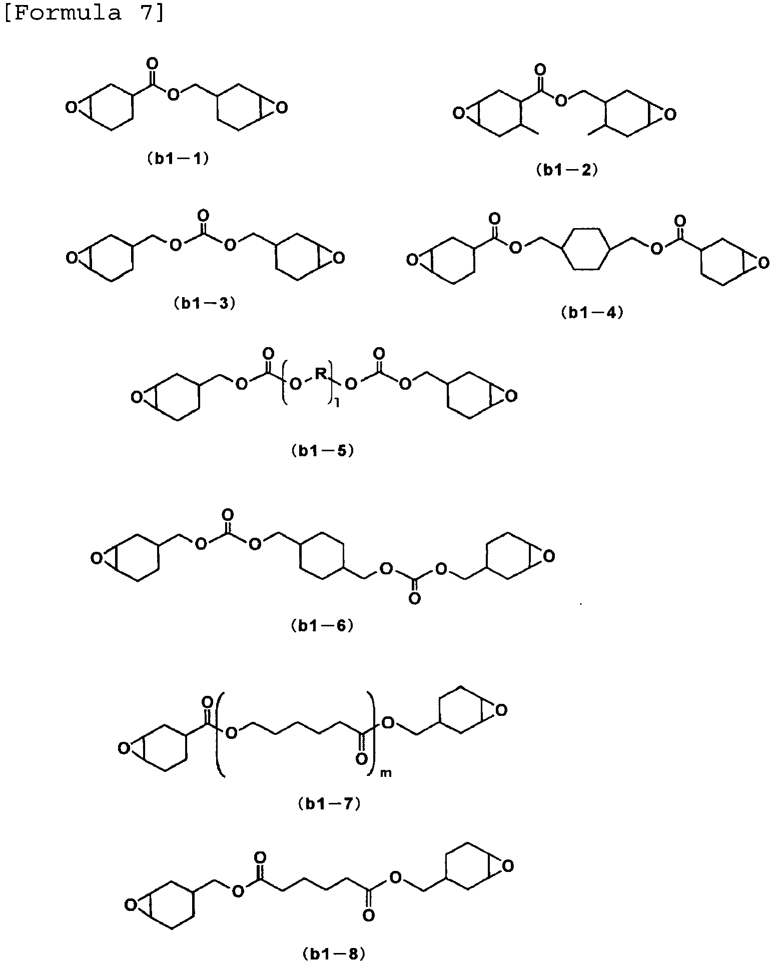 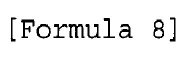 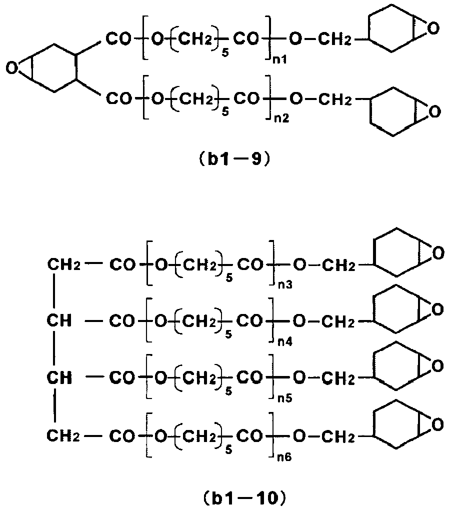 wherein 1 and m each represent an integer of 1 to 30, R represents an alkylene group having 1 to 8 carbon atoms, and n1 to n6 each represent an integer of 1 to 30.
(9) The curable resin composition according to (8) comprising, as the alicyclic epoxy compound (B), at least one selected from the group consisting of a compound represented by the following formula (b1-1) and a compound represented by the following formula (b1-70). 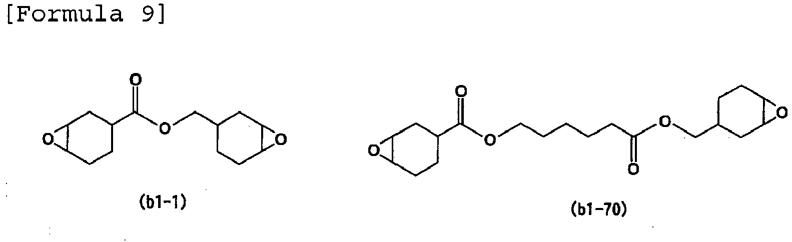
(10) The curable resin composition according to any one of (1) to (9) comprising styrene and N-phenylmaleimide as the radical polymerizable compounds (A).
(11) The curable resin composition according to (10) further comprising divinylbenzene as the radical polymerizable compound (A).
(12) The curable resin composition wherein when both the compound represented by the formula (a1) and the compound represented by the formula (a2) are contained as the radical polymerizable compounds (A) contained in the curable resin composition according to any one of (4) to (11), a proportion of the compound represented by formula (a1) to the compound represented by the formula (a2) [the compound represented by formula (a1)/the compound represented by formula (a2)] (molar ratio) is 30/70 to 70/30.
(13) The curable resin composition according to any one of (1) to (12) comprising:
   10 to 100% by weight of the alicyclic epoxy compound (B) based on a total amount (100% by weight) of compounds having an epoxy group contained in the curable resin composition;
   1 to 40 parts by weight of the radical polymerizable compound (A)
   based on 100 parts by weight of the total amount of the compounds having an epoxy group contained in the curable epoxy resin composition; and
   40 to 200 parts by weight of the acid anhydride (C) or 0.01 to 15 parts by weight of the cationic curing agent (D).
(14) The curable resin composition according to any one of (1) to (13) further comprising a radical polymerization initiator.
(15) The curable resin composition according to (14), wherein a blended amount of the radical polymerization initiator is 0.01 to 10 parts by weight based on 100 parts by weight of the total amount of the radical polymerizable compounds (A).
(16) A cured product obtained by curing the curable resin composition according to any one of (1) to (15).

### Advantageous Effects of Invention

The curable resin composition of the present invention has the above configuration and therefore forms a cured product having both high heat resistance and toughness by curing. In addition, the curable resin composition of the present invention does not comprise a high molecular weight component such as a polymer as an essential component and therefore has low viscosity and also excellent workability and handling properties.

### Description of Embodiments

### <Curable Resin Composition>

The curable resin composition of the present invention is a composition containing a radical polymerizable compound (A) (sometimes referred to as a "component (A)"), an alicyclic epoxy compound (B) (sometimes referred to as a "component (B)"), and an acid anhydride (C) (sometimes referred to as a "component (C)") or a cationic curing agent (D) (sometimes referred to as a "component (D)") as essential components. The curable resin composition of the present invention may further contain components other than the above-described components (A) to (D).

### [Radical Polymerizable Compound (A)]

The radical polymerizable compound (A) in the curable resin composition of the present invention is a compound having one or more radical polymerizable functional groups in the molecule (in one molecule). Examples of the above radical polymerizable functional group include known or common radical polymerizable functional groups and include, but are not particularly limited to, groups comprising an ethylenic unsaturated group, such as a vinyl group, an allyl group, an isopropenyl group, a vinyl ether group, an allyl ether group, a vinylaryl group, a (meth)acryloyl group, a (meth)acryloyloxy group, a vinyloxycarbonyl group, a (meth)acrylamino group, a maleate group, a maleimide group, a nadimide group, and a cinnamoyl group. As used herein, "(meth)acryl" means acryl and/or methacryl (either one or both of acryl and methacryl), and the same applies to others.

The number of radical polymerizable functional groups that the radical polymerizable compound (A) has in the molecule can be one or more and is not particularly limited, but is preferably one to four, more preferably one to three, and further preferably one or two. When the number of radical polymerizable functional groups is more than four, the toughness of the cured product may be insufficient.

Especially, as the radical polymerizable compound (A), a compound represented by the following formula (a1) [styrene or a derivative thereof] and a compound represented by the following formula (a2) [maleimide or a derivative thereof] are preferred in terms of improving the toughness of the cured product while maintaining its heat resistance. Particularly, the curable resin composition of the present invention preferably comprises both the compound represented by the following formula (a1) and the compound represented by the following formula (a2), and more preferably comprises, as the compounds represented by the following formula (a1), a compound in which R¹ to R⁵ in formula (a1) are each a group having no radical polymerizable functional group, and a compound in which at least one of R¹ to R⁵ in formula (a1) is a radical polymerizable functional group (particularly preferably a compound in which at least one of R¹ to R⁵ in formula (a1) is a vinyl group), as described later.

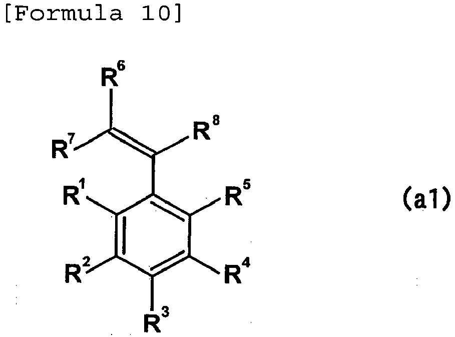

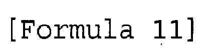

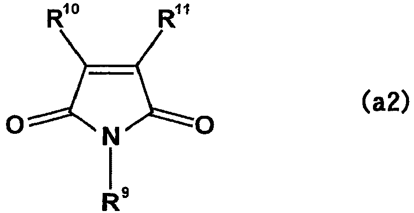

In the above formula (a1), R¹ to R⁵ identically or differently represent a hydrogen atom, a halogen atom, a monovalent organic group, a monovalent oxygen atom-containing group, a monovalent nitrogen atom-containing group, or a monovalent sulfur atom-containing group. Examples of the above halogen atom include a fluorine atom, a chlorine atom, a bromine atom, and an iodine atom. Examples of the above monovalent organic group include substituted or unsubstituted hydrocarbon groups (monovalent hydrocarbon groups), alkoxy groups, alkenyloxy groups, aryloxy groups, aralkyloxy groups, acyloxy groups, alkylthio groups, alkenylthio groups, arylthio groups, aralkylthio groups, a carboxyl group, alkoxycarbonyl groups, aryloxycarbonyl groups, aralkyloxycarbonyl groups, an epoxy group, a cyano group, an isocyanate group, a carbamoyl group, and an isothiocyanate group.

Examples of the above hydrocarbon groups include aliphatic hydrocarbon groups, alicyclic hydrocarbon groups, aromatic hydrocarbon groups, and groups in which two or more of these are bonded. Examples of the above aliphatic hydrocarbon groups include alkyl groups, alkenyl groups, and alkynyl groups. Examples of the above alkyl groups include C₁₋₂₀ alkyl groups (preferably C₁₋₁₀ alkyl groups, further preferably C₁₋₄ alkyl groups) such as a methyl group, an ethyl group, a propyl group, an isopropyl group, a butyl group, a hexyl group, an octyl group, an isooctyl group, a decyl group, and a dodecyl group. Examples of the above alkenyl groups include C₂₋₂₀ alkenyl groups (preferably C₂₋₁₀ alkenyl groups, further preferably C₂₋₄ alkenyl groups) such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group. Examples of the above alkynyl groups include C₂₋₂₀ alkynyl groups (preferably C₂₋₁₀ alkynyl groups, further preferably C₂₋₄ alkynyl groups) such as an ethynyl group and a propynyl group.

Examples of the above alicyclic hydrocarbon groups include C₃₋₁₂ cycloalkyl groups such as a cyclopropyl group, a cyclobutyl group, a cyclopentyl group, a cyclohexyl group, and a cyclododecyl group; C₃₋₁₂ cycloalkenyl groups such as a cyclohexenyl group; and C₄₋₁₅ crosslinked cyclic hydrocarbon groups such as a bicycloheptanyl group and a bicycloheptenyl group.

Examples of the above aromatic hydrocarbon groups include C₆₋₁₄ aryl groups (particularly C₆₋₁₀ aryl groups) such as a phenyl group and a naphthyl group.

In addition, examples of the above hydrocarbon groups include groups in which an aliphatic hydrocarbon group is bonded to an alicyclic hydrocarbon group, such as a cyclohexylmethyl group and a methylcyclohexyl group; and groups in which an aliphatic hydrocarbon group is bonded to an aromatic hydrocarbon group, such as C₇₋₁₈ aralkyl groups (particularly C₇₋₁₀ aralkyl groups) such as a benzyl group and a phenethyl group, C₆₋₁₀ aryl-C₂₋₆ alkenyl groups such as a cinnamyl group, C₁₋₄ alkylsubstituted aryl groups such as a tolyl group, and C₂₋₄ alkenyl-substituted aryl groups such as a styryl group.

The above hydrocarbon groups may have a substituent. The number of carbon atoms of the substituent in the above hydrocarbon group is preferably 0 to 20, more preferably 0 to 10. Examples of the substituent include halogen atoms such as a fluorine atom, a chlorine atom, a bromine atom, and an iodine atom; a hydroxyl group; alkoxy groups (preferably C₁₋₆ alkoxy groups, more preferably C₁₋₄ alkoxy groups) such as a methoxy group, an ethoxy group, a propoxy group, an isopropyloxy group, a butoxy group, and an isobutyloxy group; alkenyloxy groups (preferably C₂₋₆ alkenyloxy groups, more preferably C₂₋₄ alkenyloxy groups) such as an allyloxy group; aryloxy groups (preferably C₆₋₁₄ aryloxy groups) that may have a substituent such as a C₁₋₄ alkyl group, a C₂₋₄ alkenyl group, a halogen atom, or a C₁₋₄ alkoxy group in the aromatic ring, such as a phenoxy group, a tolyloxy group, and a naphthyloxy group; aralkyloxy groups (preferably C₇₋₁₈ aralkyloxy groups) such as a benzyloxy group and a phenethyloxy group; acyloxy groups (preferably C₁₋₁₂ acyloxy groups) such as an acetyloxy group, a propionyloxy group, a (meth)acryloyloxy group, and a benzoyloxy group; a mercapto group; alkylthio groups (preferably C₁₋₆ alkylthio groups, more preferably C₁₋₄ alkylthio groups) such as a methylthio group and an ethylthio group; alkenylthio groups (preferably C₂₋₆ alkenylthio groups, more preferably C₂₋₄ alkenylthio groups) such as an allylthio group; arylthio groups (preferably C₆₋₁₄ arylthio groups) that may have a substituent such as a C₁₋₄ alkyl group, a C₂₋₄ alkenyl group, a halogen atom, or a C₁₋₄ alkoxy group in the aromatic ring, such as a phenylthio group, a tolylthio group, and a naphthylthio group; aralkylthio groups (preferably C₇₋₁₈ aralkylthio groups) such as a benzylthio group and a phenethylthio group; a carboxyl group; alkoxycarbonyl groups (preferably C₁₋₆ alkoxy-carbonyl groups) such as a methoxycarbonyl group, an ethoxycarbonyl group, a propoxycarbonyl group, and a butoxycarbonyl group; aryloxycarbonyl groups (preferably C₆₋₁₄ aryloxy-carbonyl groups) such as a phenoxycarbonyl group, a tolyloxycarbonyl group, and a naphthyloxycarbonyl group; aralkyloxycarbonyl groups (preferably C₇₋₁₈ aralkyloxy-carbonyl groups) such as a benzyloxycarbonyl group; an amino group; mono- or dialkylamino groups (preferably mono- or di-C₁₋₆ alkylamino groups) such as a methylamino group, an ethylamino group, a dimethylamino group, and a diethylamino group; acylamino groups (preferably C₁₋₁₁ acylamino groups) such as an acetylamino group, a propionylamino group, and a benzoylamino group; epoxy group-containing groups such as a glycidyloxy group; oxetanyl group-containing groups such as an ethyloxetanyloxy group; acyl groups such as an acetyl group, a propionyl group, and a benzoyl group; an oxo group; and groups in which two or more of these are bonded via a C₁₋₆ alkylene group as required.

Examples of the above monovalent oxygen atom-containing group include a hydroxyl group, a hydroperoxy group, alkenyloxy groups, aryloxy groups, aralkyloxy groups, acyloxy groups, an isocyanate group, a sulfo group, and a carbamoyl group. Examples of the above monovalent nitrogen atom-containing group include an amino group or substituted amino groups (mono- or dialkylamino groups, acylamino groups, and the like), a cyano group, an isocyanate group, an isothiocyanate group, and a carbamoyl group. In addition, examples of the above monovalent sulfur atom-containing group include a mercapto group (thiol group), a sulfo group, alkylthio groups, alkenylthio groups, arylthio groups, aralkylthio groups, and an isothiocyanate group. The above-described monovalent organic group, monovalent oxygen atom-containing group, monovalent nitrogen atom-containing group, and monovalent sulfur atom-containing group can overlap with each other.

In the above formula (a1), two or more selected from the R¹ to R⁵ may be bonded to each other to form a ring together with carbon atoms constituting the aromatic ring shown in the formula. The ring composed of two or more selected from R¹ to R⁵ and carbon atoms constituting the aromatic ring shown in the formula may be an aromatic ring (an aromatic hydrocarbon ring, an aromatic heterocycle, or the like) or a non-aromatic ring (for example, an aliphatic hydrocarbon ring or a non-aromatic heterocycle).

R⁶ to R⁸ in the above formula (a1) identically or differently represent a hydrogen atom, a halogen atom, or an alkyl group. Examples of the halogen atom or the alkyl group as the above R⁶ to R⁸ include the same ones as illustrated as the above R¹ to R⁵. The alkyl group for the above R⁶ to R⁸ may have the above-described substituent (the substituent that the hydrocarbon group for R¹ to R⁵ may have). Especially, as R⁶ to R⁸, a hydrogen atom is preferred, and it is particularly preferred that all of R⁶ to R⁸ are hydrogen atoms.

Specific examples of the compound represented by the above formula (a1) include styrene, α-methylstyrene, α-chlorostyrene, α-bromostyrene, 2-(trifluoromethyl)styrene, 3-(trifluoromethyl)styrene, 2-chlorostyrene, 3-chlorostyrene, 4-chlorostyrene, 2-bromostyrene, 3-bromostyrene, 4-bromostyrene, p-divinylbenzene, 1-chloro-4-(2-methyl-1-propenyl)benzene, 4-methyl-2-phenyl-2-pentene, 3,4-dimethoxystyrene, p-vinylphenol, m-vinylphenol, o-vinylphenol, α-vinylbenzyl-ω-methyl-polyethylene oxide, α-vinylbenzyl-ω-methyl-polypropylene oxide, α-vinylbenzyl-ω-methyl-poly(ethylene oxide-propylene oxide), vinylnaphthalene, isopropenylnaphthalene, vinylanthracene, isopropenylanthracene, vinylphenanthrene, and isopropenylphenanthrene.

Especially, in the curable resin composition of the present invention, as the compound represented by the above formula (a1), at least a monofunctional radical polymerizable compound having one radical polymerizable functional group in the molecule is preferably used, and particularly, in terms of achieving the transparency, heat resistance, and toughness of the cured product at higher levels, the above monofunctional radical polymerizable compound and a polyfunctional radical polymerizable compound having two or more (preferably two to four, more preferably two) radical polymerizable functional groups in the molecule are preferably used in combination. As the above monofunctional radical polymerizable compound, specifically, a compound which is represented by formula (a1) and in which R¹ to R⁵ are each a group having no radical polymerizable functional group (for example, a hydrogen atom, a halogen atom, an alkyl group, a cycloalkyl group, or a hydroxyl group) is illustrated, and particularly in terms of achieving both the heat resistance and toughness of the cured product, a compound which is represented by formula (a1) and in which R¹ to R⁵ are each a hydrogen atom or an alkyl group is preferred, and styrene is more preferred. As the above polyfunctional radical polymerizable compound, specifically, a compound which is represented by formula (a1) and in which at least one (preferably one to three, more preferably one) of R¹ to R⁵ is a radical polymerizable functional group is illustrated, and particularly in terms of achieving the transparency, heat resistance, and toughness of the cured product at higher levels, a compound which is represented by formula (a1) and in which at least one (preferably one to three, more preferably one) of R¹ to R⁵ is a vinyl group is preferred, and divinylbenzene is more preferred.

R⁹ in the above formula (a2) identically or differently represents a hydrogen atom, a halogen atom, a monovalent organic group, a monovalent oxygen atom-containing group, a monovalent nitrogen atom-containing group, or a monovalent sulfur atom-containing group. Examples of R⁹ include the same groups as illustrated as R¹ to R⁵.

R¹⁰ and R¹¹ in the above formula (a2) identically or differently represent a hydrogen atom, a halogen atom, a monovalent organic group, a monovalent oxygen atom-containing group, a monovalent nitrogen atom-containing group, or a monovalent sulfur atom-containing group. Examples of R¹⁰ and R¹¹ include the same groups as illustrated as R¹ to R⁵.

In the above formula (a2), R¹⁰ and R¹¹ may be bonded to each other to form a ring together with carbon atoms shown in the formula (two carbon atoms bonded by a double bond in the formula). The ring composed of R¹⁰ and R¹¹ and carbon atoms shown in the formula may be an aromatic ring (an aromatic hydrocarbon ring, an aromatic heterocycle, or the like) or a non-aromatic ring (for example, an aliphatic hydrocarbon ring or a non-aromatic heterocycle).

Examples of the compound represented by the above formula (a2) include maleimide, N-methylmaleimide, N-ethylmaleimide, N-propylmaleimide, N-isopropylmaleimide, N-butylmaleimide, N-isobutylmaleimide, N-s-butylmaleimide, N-t-butylmaleimide, N-phenylmaleimide, N-naphthylmaleimide, N-pyrenylmaleimide, N-methoxycarbonylmaleimide, N-hydroxymaleimide, N-hydroxy-2-phenylmaleimide, and N-phenyl-hydroxymethyl-3,4,5,6-tetrahydrophthalimide.

Examples of the radical polymerizable compound (A) include, in addition to the compound represented by formula (a1) and the compound represented by formula (a2), compounds having a (meth)acryloyl group such as 1-buten-3-one, 1-penten-3-one, 1-hexen-3-one, 4-phenyl-1-buten-3-one, 5-phenyl-1-penten-3-one, and derivatives thereof; compounds having a (meth)acryloyloxy group such as methyl (meth)acrylate, ethyl (meth)acrylate, n-butyl (meth)acrylate, isobutyl (meth)acrylate, t-butyl methacrylate, n-hexyl (meth)acrylate, 2-ethylhexyl (meth)acrylate, isodecyl (meth)acrylate, n-lauryl (meth)acrylate, n-stearyl (meth)acrylate, n-butoxyethyl (meth)acrylate, butoxydiethylene glycol (meth)acrylate, methoxytriethylene glycol (meth)acrylate, methoxypolyethylene glycol (meth)acrylate, cyclohexyl (meth)acrylate, tetrahydrofurfuryl (meth)acrylate, benzyl (meth)acrylate, phenoxyethyl (meth)acrylate, isobornyl (meth)acrylate, 2-hydroxyethyl (meth)acrylate, 2-hydroxypropyl (meth)acrylate, 2-hydroxybutyl (meth)acrylate, dimethylaminoethyl (meth)acrylate, diethylaminoethyl (meth)acrylate, (meth)acrylic acid, 2-(meth)acryloyloxyethylsuccinic acid, 2-(meth)acryloyloxyethylhexahydrophthalic acid, 2-(meth)acryloyloxyethyl-2-hydroxypropyl phthalate, glycidyl (meth)acrylate, 2-(meth)acryloyloxyethyl acid phosphate, ethylene glycol di(meth)acrylate, diethylene glycol di(meth)acrylate, triethylene glycol di(meth)acrylate, 1,4-butanediol di(meth)acrylate, neopentyl glycol di(meth)acrylate, 1,6-hexanediol di(meth)acrylate, 1,9-nonanediol di(meth)acrylate, 1,10-decanediol di(meth)acrylate, decane di(meth)acrylate, glycerin di(meth)acrylate, 2-hydroxy-3-(meth)acryloyloxypropyl (meth)acrylate, dimethyloltricyclodecane di(meth)acrylate, trifluoroethyl (meth)acrylate, perfluorooctylethyl (meth)acrylate, isoamyl (meth)acrylate, isomyristyl (meth)acrylate, γ-(meth)acryloyloxypropyltrimethoxysilane, 2-(meth)acryloyloxyethyl isocyanate, 1,1-bis{(meth)acryloyloxy}ethyl isocyanate, 2-{2-(meth)acryloyloxyethyloxy}ethyl isocyanate, 3-(meth)acryloyloxypropyltriethoxysilane, and derivatives thereof; compounds having a (meth)acryloylamino group such as 4-(meth)acryloylmorpholine, N,N-dimethyl(meth)acrylamide, N,N-diethyl(meth)acrylamide, N-methyl(meth)acrylamide, N-ethyl(meth)acrylamide, N-propyl(meth)acrylamide, N-isopropyl(meth)acrylamide, N-butyl(meth)acrylamide, N-n-butoxymethyl(meth)acrylamide, N-hexyl(meth)acrylamide, N-octyl(meth)acrylamide, and derivatives thereof; compounds having a vinyl ether group such as 2-hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 3-hydroxybutyl vinyl ether, 2-hydroxybutyl vinyl ether, 3-hydroxyisobutyl vinyl ether, 2-hydroxyisobutyl vinyl ether, 1-methyl-3-hydroxypropyl vinyl ether, 1-methyl-2-hydroxypropyl vinyl ether, 1-hydroxymethylpropyl vinyl ether, 4-hydroxycyclohexyl vinyl ether, 1,6-hexanediol monovinyl ether, 1,4-cyclohexanedimethanol monovinyl ether, 1,3-cyclohexanedimethanol monovinyl ether, 1,2-cyclohexanedimethanol monovinyl ether, p-xylene glycol monovinyl ether, m-xylene glycol monovinyl ether, o-xylene glycol monovinyl ether, diethylene glycol monovinyl ether, triethylene glycol monovinyl ether, tetraethylene glycol monovinyl ether, pentaethylene glycol monovinyl ether, oligoethylene glycol monovinyl ether, polyethylene glycol monovinyl ether, dipropylene glycol monovinyl ether, tripropylene glycol monovinyl ether, tetrapropylene glycol monovinyl ether, pentapropylene glycol monovinyl ether, oligopropylene glycol monovinyl ether, polypropylene glycol monovinyl ether, and derivatives thereof; and compounds having a vinyloxycarbonyl group such as isopropenyl formate, isopropenyl acetate, isopropenyl propionate, isopropenyl butyrate, isopropenyl isobutyrate, isopropenyl caproate, isopropenyl valerate, isopropenyl isovalerate, isopropenyl lactate, vinyl acetate, vinyl propionate, vinyl butyrate, vinyl caproate, vinyl caprylate, vinyl laurate, vinyl myristate, vinyl palmitate, vinyl stearate, vinyl cyclohexanecarboxylate, vinyl pivalate, vinyl octylate, vinyl monochloroacetate, divinyl adipate, vinyl (meth)acrylate, vinyl crotonate, vinyl sorbate, vinyl benzoate, vinyl cinnamate, and derivatives thereof.

In the curable resin composition of the present invention, one of the radical polymerizable compounds (A) can be used alone, or two or more of the radical polymerizable compounds (A) can be used in combination.

The content (blended amount) of the radical polymerizable compound (A) in the curable resin composition of the present invention is not particularly limited but is preferably 1 to 40 parts by weight, more preferably 3 to 35 parts by weight, and further preferably 5 to 30 parts by weight based on 100 parts by weight of the total amount of the compounds having an epoxy group contained in the curable resin composition. When the content of the radical polymerizable compound (A) is less than 1 part by weight, the toughness of the cured product may be insufficient. On the other hand, when the content of the radical polymerizable compound (A) is more than 40 parts by weight, mechanical properties such as flexural strength may decrease.

Here, the compounds having an epoxy group contained in the curable resin composition mean not only the above alicyclic epoxy compound (B) but all compounds having an epoxy group contained in the curable resin composition.

The content of the compound represented by formula (a1) and the compound represented by formula (a2) based on the total amount (100% by weight) of the radical polymerizable compounds (A) in the curable resin composition of the present invention is not particularly limited but is preferably not less than 70% by weight (for example, 70 to 100% by weight), more preferably not less than 80% by weight, and further preferably not less than 90% by weight. When the content is less than 70% by weight, the heat resistance and toughness of the cured product may decrease.

When the curable resin composition of the present invention comprises both the compound represented by formula (a1) and the compound represented by formula (a2) as the radical polymerizable compounds (A), the proportion of these compounds [the compound represented by formula (a1)/the compound represented by formula (a2)] (molar ratio) is not particularly limited but is preferably 30/70 to 70/30, more preferably 40/60 to 60/40. When the above proportion is outside the above range, the content of the homopolymer of the compound represented by formula (a1) is likely to increase in the cured product, or the compound represented by formula (a2) is likely to remain, and therefore, physical properties such as heat resistance may be adversely affected.

When the above monofunctional radical polymerizable compound and the above polyfunctional radical polymerizable compound are used in combination as the compounds represented by the above formula (a1), the content (blended amount) of the above polyfunctional radical polymerizable compound is not particularly limited but is preferably 0.1 to 5 mol%, more preferably 0.5 to 3 mol%, based on the total amount (100 mol%) of the radical polymerizable compounds (A). By controlling the content of the polyfunctional radical polymerizable compound in the above range, the transparency, heat resistance, and toughness of the cured product tend to be achieved at higher levels.

When a compound in which at least one of R¹ to R⁵ in the above-described formula (a1) is a radical polymerizable functional group (preferably a compound in which at least one of R¹ to R⁵ in formula (a1) is a vinyl group, more preferably divinylbenzene) is used as the compound represented by the above formula (a1), the content (blended amount) of the compound in which at least one of R¹ to R⁵ in formula (a1) is a radical polymerizable functional group is not particularly limited but is preferably 0.1 to 5 mol%, more preferably 0.5 to 3 mol%, based on the total amount (100 mol%) of the radical polymerizable compounds (A). By controlling the content of the compound in which at least one of R¹ to R⁵ in formula (a1) is a radical polymerizable functional group in the above range, the transparency, heat resistance, and toughness of the cured product tend to be achieved at higher levels.

### [Alicyclic Epoxy Compound (B)]

The alicyclic epoxy compound (B) in the curable resin composition of the present invention is a compound having at least one or more aliphatic ring (alicyclic) structures and one or more epoxy groups in the molecule (in one molecule). Specific examples of the alicyclic epoxy compound (B) include (i) a compound having an epoxy group composed of two adjacent carbon atoms constituting an aliphatic ring and an oxygen atom (alicyclic epoxy group), (ii) a compound in which an epoxy group is directly bonded to an aliphatic ring by a single bond, and (iii) a hydrogenated aromatic glycidyl ether-based epoxy compound (a hydride of an aromatic glycidyl ether-based epoxy compound).

The above-described (i) compound having an epoxy group composed of two adjacent carbon atoms constituting an aliphatic ring and an oxygen atom (alicyclic epoxy group) can be arbitrarily selected from known or common ones and used. Especially, as the above alicyclic epoxy group, a cyclohexene oxide group is preferred.

As the above-described (i) compound having an epoxy group composed of two adjacent carbon atoms constituting an aliphatic ring and an oxygen atom, in terms of the transparency and heat resistance of the cured product, compounds having a cyclohexene oxide group are preferred, and particularly, a compound (alicyclic epoxy compound) represented by the following formula (b1) is preferred.

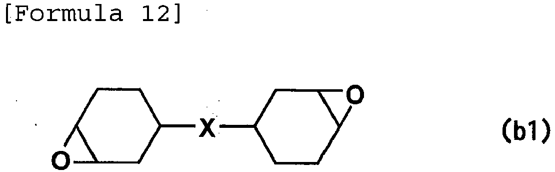

In the above formula (b1), X represents a single bond or a linking group (a divalent group comprising one or more atoms). Examples of the above linking group include divalent hydrocarbon groups, a carbonyl group, an ether bond, an ester bond, a carbonate group, an amide group, and groups in which a plurality of these are linked.

Examples of the alicyclic epoxy compound (B) in which X in the above formula (b1) is a single bond include 3,4,3',4'-diepoxybicyclohexane.

Examples of the above divalent hydrocarbon groups include straight chain or branched chain alkylene groups having 1 to 18 carbon atoms and divalent alicyclic hydrocarbon groups. Examples of the straight chain or branched chain alkylene groups having 1 to 18 carbon atoms include a methylene group, a methylmethylene group, a dimethylmethylene group, an ethylene group, a propylene group, and a trimethylene group. Examples of the above divalent alicyclic hydrocarbon groups include divalent cycloalkylene groups (including cycloalkylidene groups) such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

As the above linking group X, particularly, linking groups containing an oxygen atom are preferred, and specific examples thereof include -CO-, -O-CO-O-, -COO-, -O-, and -CONH-; groups in which a plurality of these groups are linked; and groups in which one or two or more of these groups are linked to one or two or more divalent hydrocarbon groups. Examples of the divalent hydrocarbon groups include those illustrated above.

Typical examples of the alicyclic epoxy compound represented by the above formula (b1) include compounds represented by the following formulas (b1-1) to (b1-10). 1 and m in the following formulas (b1-5) and (b1-7) each represent an integer of 1 to 30. R in the following formula (b1-5) is an alkylene group having 1 to 8 carbon atoms, and examples thereof include straight chain or branched chain alkylene groups such as a methylene group, an ethylene group, a propylene group, an isopropylene group, a butylene group, an isobutylene group, a s-butylene group, a pentylene group, a hexylene group, a heptylene group, and an octylene group. Among these, straight chain or branched chain alkylene groups having 1 to 3 carbon atoms such as a methylene group, an ethylene group, a propylene group, and an isopropylene group are preferred. n1 to n6 in the following formulas (b1-9) and (b1-10) each represent an integer of 1 to 30.

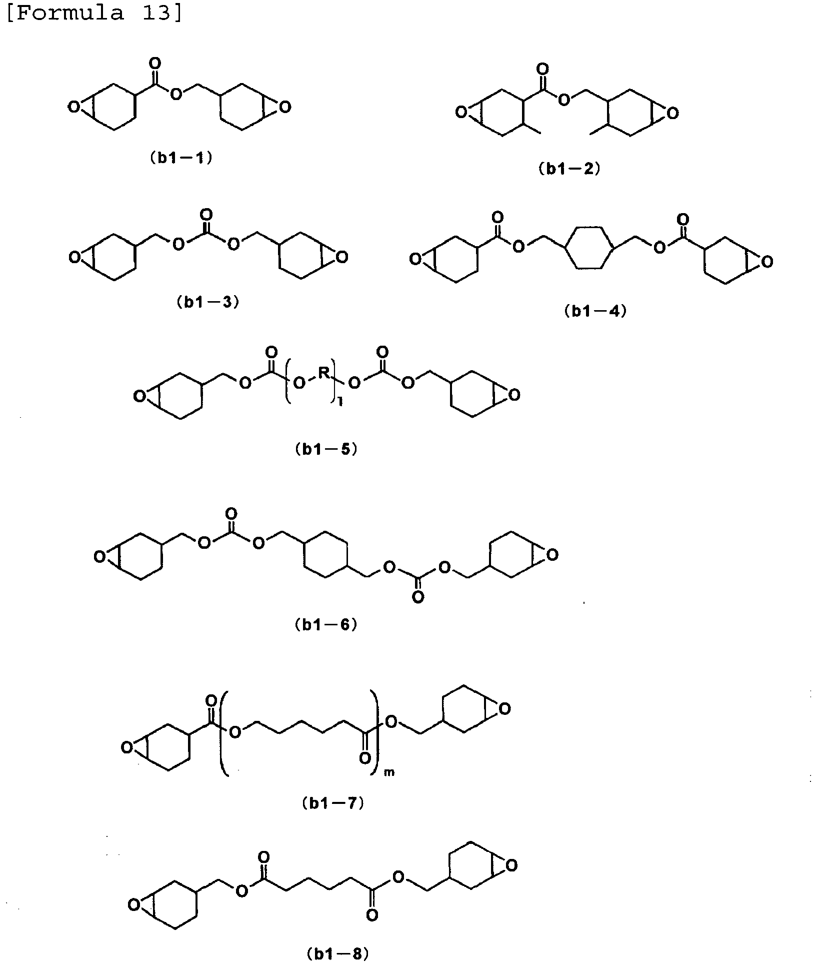

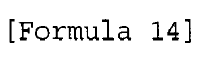

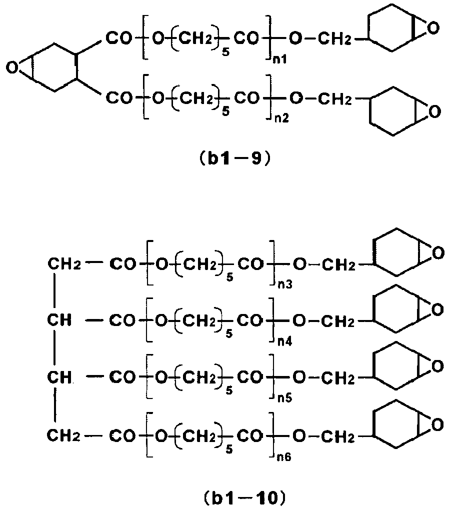

Examples of the above-described (ii) compound in which an epoxy group is directly bonded to an aliphatic ring by a single bond include a compound represented by the following formula (b2) :

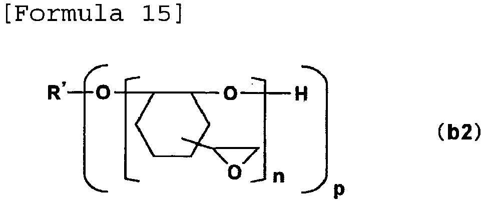

In formula (b2), R¹ is a group obtained by removing a p number of -OH from the structural formula of a p-hydric alcohol, and p and n each represent a natural number. Examples of the p-hydric alcohol [R'-(OH)p] include polyhydric alcohols (alcohols having 1 to 15 carbon atoms) such as 2,2-bis(hydroxymethyl)-1-butanol. p is preferably 1 to 6, and n is preferably 1 to 30. When p is 2 or more, n in the groups within the respective () (within the outer parentheses) may be the same or different. Specific examples of the above compound include a 1,2-epoxy-4-(2-oxiranyl)cyclohexane adduct of 2,2-bis(hydroxymethyl)-1-butanol, the trade name "EHPE3150" (manufactured by Daicel Corporation).

Examples of the above (iii) hydrogenated aromatic glycidyl ether-based epoxy compound include compounds obtained by hydrogenating bisphenol A type epoxy compounds (nucleus-hydrogenated bisphenol A type epoxy compounds), such as 2,2-bis[4-(2,3-epoxypropoxy)cyclohexyl]propane, 2,2-bis[3,5-dimethyl-4-(2,3-epoxypropoxy)cyclohexyl]propane, and a compound represented by the following formula (b3); compounds obtained by hydrogenating bisphenol F type epoxy compounds (nucleus-hydrogenated bisphenol F type epoxy compounds), such as bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane, and bis[3,5-dimethyl-4-(2,3-epoxypropoxy)cyclohexyl]methane; hydrogenated biphenol type epoxy compounds; hydrogenated phenol novolac type epoxy compounds; hydrogenated cresol novolac type epoxy compounds; hydrogenated epoxy compounds of cresol novolac type epoxy compounds of bisphenol A; hydrogenated naphthalene type epoxy compounds; and hydrogenated epoxy compounds of epoxy compounds obtained from trisphenolmethane. 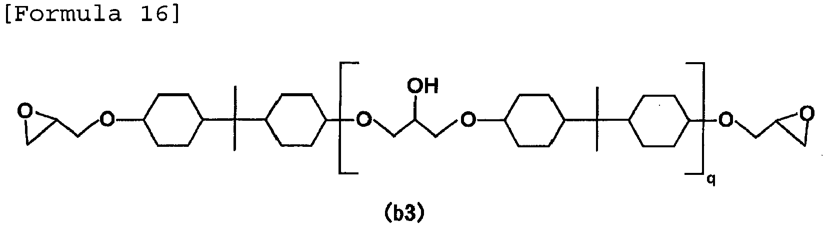 wherein q represents an integer of 0 to 2.

In the curable resin composition of the present invention, one of the alicyclic epoxy compounds (B) can be used alone, or two or more of the alicyclic epoxy compounds (B) can be used in combination. In addition, as the alicyclic epoxy compound (B), for example, commercial products such as the trade name "CELLOXIDE 2021P" (manufactured by Daicel Corporation) and the trade name "CELLOXIDE 2081" (manufactured by Daicel Corporation) can also be used.

As the alicyclic epoxy compound (B), the compound represented by the above formula (b1-1) [3,4-epoxycyclohexylmethyl (3,4-epoxy)cyclohexanecarboxylate: for example, the trade name "CELLOXIDE 2021P" (manufactured by Daicel Corporation)] and a compound which is represented by the above formula (b1-7) and in which m is 1, that is, a compound represented by the following formula (b1-70) [for example, the trade name "CELLOXIDE 2081" (manufactured by Daicel Corporation)], are particularly preferred.

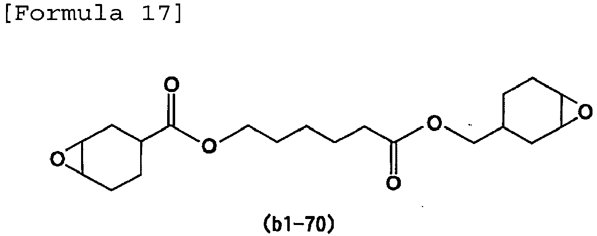

The content (blended amount) of the alicyclic epoxy compound (B) in the curable resin composition of the present invention is not particularly limited but is preferably 10 to 98% by weight, more preferably 20 to 95% by weight, and further preferably 30 to 92% by weight based on the total amount (100% by weight) of the curable resin composition. When the content of the alicyclic epoxy compound (B) is less than 10% by weight, the heat resistance and transparency of the cured product may decrease. On the other hand, when the content of the alicyclic epoxy compound (B) is more than 98% by weight, the toughness of the cured product may decrease.

The content (blended amount) of the alicyclic epoxy compound (B) based on the total amount (100% by weight) of the compounds having an epoxy group contained in the curable resin composition of the present invention is not particularly limited but is preferably not less than 10% by weight (for example, 10 to 100% by weight), more preferably not less than 20% by weight, and further preferably not less than 30% by weight. When the content of the alicyclic epoxy compound (B) is less than 10% by weight, the heat resistance and transparency of the cured product may decrease.

### [Acid Anhydride (C)]

The acid anhydride (C) in the curable resin composition of the present invention is a compound having the function of reacting with a compound having an epoxy group to cure the curable resin composition. As the acid anhydride (C), known or common acid anhydrides can be used, and examples thereof include, but are not particularly limited to, methyltetrahydrophthalic anhydride, methylhexahydrophthalic anhydride, dodecenylsuccinic anhydride, methylendomethylenetetrahydrophthalic anhydride, hydrogenated methylnadic anhydride, methylhimic anhydride, trialkyltetrahydrophthalic anhydride maleic acid adducts, phthalic anhydride, tetrahydrophthalic anhydride, hexahydrophthalic anhydride, methylcyclohexenedicarboxylic anhydride, and derivatives thereof (for example, a ring to which a substituent such as an alkyl group is bonded).

Especially, in terms of the transparency and light resistance of the cured product, as the acid anhydride (C), anhydrides of saturated monocyclic hydrocarbon dicarboxylic acids or derivatives thereof are preferred. In addition, in terms of the handling properties of the curable resin composition, acid anhydrides liquid at 25°C (for example, hydrogenated methylnadic anhydride, methyltetrahydrophthalic anhydride, methylhexahydrophthalic anhydride, dodecenylsuccinic anhydride, and methylendomethylenetetrahydrophthalic anhydride) are preferred, and particularly, hydrogenated methylnadic anhydride is preferred. Even with acid anhydrides solid at 25°C (for example, phthalic anhydride, tetrahydrophthalic anhydride, hexahydrophthalic anhydride, and methylcyclohexenedicarboxylic anhydride), the handling properties as the acid anhydride (C) can be improved by mixing with the above-described acid anhydride liquid at 25°C to form a liquid composition (curing agent composition).

In the curable resin composition of the present invention, one of the acid anhydrides (C) can be used alone, or two or more of the acid anhydrides (C) can be used in combination. In addition, as the acid anhydride (C), for example, commercial products such as the trade name "RIKACID MH-700" (manufactured by New Japan Chemical Co., Ltd.), the trade name "RIKACID MH-700F" (manufactured by New Japan Chemical Co., Ltd.), and the trade name "HN-5500" (manufactured by Hitachi Chemical Co., Ltd.) can also be used.

The content (blended amount) of the acid anhydride (C) in the curable resin composition of the present invention is not particularly limited but is preferably 40 to 200 parts by weight, more preferably 50 to 145 parts by weight, based on 100 parts by weight of the total amount of the compounds having an epoxy group. More particularly, the acid anhydride (C) is preferably used in a proportion of 0.5 to 1.5 equivalents to 1 equivalent of epoxy groups in all compounds having an epoxy group contained in the curable resin composition of the present invention. When the content of the acid anhydride (C) is less than 40 parts by weight, the toughness and electrical properties of the cured product may decrease. On the other hand, when the content of the acid anhydride (C) is more than 200 parts by weight, the acid anhydride remains in the cured product, and therefore, the thermal stability may decrease.

### [Curing Accelerator]

The curable resin composition of the present invention may comprise a curing accelerator. The above curing accelerator is a compound having the function of accelerating the reaction of a compound having an epoxy group (particularly the alicyclic epoxy compound (B)) and the acid anhydride (C). As the above curing accelerator, known or common curing accelerators can be used, and examples thereof include, but are not particularly limited to, 1,8-diazabicyclo[5.4.0]undecene-7 (DBU) and salts (for example, a phenol salt, an octylate, a p-toluenesulfonate, a formate, and a tetraphenylborate salt) thereof; 1,5-diazabicyclo[4.3.0]nonene-5 (DBN) and salts (for example, a phenol salt, an octylate, a p-toluenesulfonate, a formate, and a tetraphenylborate salt) thereof; tertiary amines such as benzyldimethylamine, 2,4,6-tris(dimethylaminomethyl)phenol, and N,N-dimethylcyclohexylamine; imidazoles such as 2-ethyl-4-methylimidazole and 1-cyanoethyl-2-ethyl-4-methylimidazole; phosphates and phosphines such as triphenylphosphine; phosphonium compounds such as tetraphenylphosphonium tetra(p-tolyl)borate; organic metal salts such as tin octylate and zinc octylate; and metal chelates.

In the curable resin composition of the present invention, one of the above curing accelerators can be used alone, or two or more of the above curing accelerators can be used in combination. In addition, as the above curing accelerator, for example, commercial products such as the trade name "U-CAT SA 506," the trade name "U-CAT SA 102," the trade name "U-CAT 5003," the trade name "U-CAT 18X," and "12XD" (developed product) (all manufactured by San-Apro Ltd.), the trade name "TPP-K" and the trade name "TPP-MK" (both manufactured by HOKKO CHEMICAL INDUSTRY CO., LTD.), and the trade name "PX-4ET" (manufactured by Nippon Chemical Industrial Co., Ltd.) can also be used.

The content (blended amount) of the above curing accelerator is not particularly limited but is preferably 0.05 to 5 parts by weight, more preferably 0.1 to 3 parts by weight, further preferably 0.2 to 3 parts by weight, and particularly preferably 0.25 to 2.5 parts by weight based on 100 parts by weight of the total amount of the compounds having an epoxy group contained in the curable resin composition. When the content of the curing accelerator is less than 0.05 parts by weight, the curing acceleration effect may be insufficient. On the other hand, when the content of the curing accelerator is more than 5 parts by weight, the pot life is insufficient, and therefore, the handling of the blend (curable resin composition) may be difficult, or the cured product may be colored to worsen the hue.

### [Cationic Curing Agent (D)]

The cationic curing agent (D) in the curable resin composition of the present invention is used, for example, instead of the acid anhydride (C) (or the acid anhydride (C) and the curing accelerator) and is a compound having the function of allowing the curing reaction (cationic polymerization reaction) of a cationically polymerizable compound (particularly the alicyclic epoxy compound (B)) to proceed. The cationic curing agent (D) is not particularly limited, and cationic catalysts (cationic polymerization initiators) can be used that generate a cationic species by being subjected to ultraviolet irradiation or heat treatment to initiate polymerization. One of the cationic curing agents (D) can be used alone, or two or more of the cationic curing agents (D) can be used in combination.

Examples of the cationic curing agent (D) include complexes of Lewis acids and bases, quaternary phosphonium salts, quaternary arsonium salts, tertiary sulfonium salts, tertiary selenonium salts, secondary iodonium salts, and diazonium salts.

Examples of the complexes of Lewis acids and bases include those that dissociate at high temperature to produce a Lewis acid. As the above Lewis acids, particularly, boron halides such as boron trifluoride and boron trichloride; phosphorus halides such as phosphorus pentafluoride; antimony halides such as antimony pentafluoride; and the like are preferred. As the above bases, particularly, organic amines, alcohols, ethers, and the like are preferred. Typical examples of the complexes of Lewis acids and bases include boron trifluoride-organic amine complexes such as a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, and a boron trichloride-dimethyloctylamine complex; boron trifluoride-alcohol complexes (alcohol complex salts of boron trifluoride) such as a boron trifluoride-methanol complex, a boron trifluoride-ethanol complex, and a boron trifluoride propanol complex; boron trifluoride-phenol complexes such as a boron trifluoride-phenol complex; boron trifluoride-ether complexes (ether complex salts of boron trifluoride) such as a boron trifluoride-dimethyl ether complex, a boron trifluoride-diethyl ether complex, and a boron trifluoride-tetrahydrofuran complex; and boron trifluoride-nitrile complexes such as a boron trifluoride-acetonitrile complex.

As the quaternary phosphonium salts, for example, quaternary phosphonium salts having a tetrafluoroborate ion, a tetrakis(pentafluorophenyl)borate ion, or the like as a counterion can be used.

Examples of the quaternary arsonium salts, the tertiary sulfonium salts, the tertiary selenonium salts, the secondary iodonium salts, or the diazonium salts include quaternary arsonium salts, tertiary sulfonium salts, tertiary selenonium salts, secondary iodonium salts, or diazonium salts each having a tetrafluoroborate ion, a tetrakis(pentafluorophenylborate ion), or the like as a counterion. Examples of such compounds include the trade name "RHODORSIL Photoinitiator2074" (manufactured by Rhodia) and the trade name "SAN-AID SI-B3" (manufactured by SANSHIN CHEMICAL INDUSTRY CO., LTD.).

Particularly, examples of the cationic catalysts that generate a cationic species by ultraviolet irradiation include hexafluoroantimonate salts, pentafluorohydroxyantimonate salts, hexafluorophosphate salts, and hexafluoroarsenate salts. As the above cationic catalysts, for example, commercial products such as the trade name "UVACURE1590" (manufactured by DAICEL-CYTEC Co., Ltd.); the trade names "CD-1010," "CD-1011," and "CD-1012" (manufactured by Sartomer, USA); the trade name "IRGACURE 264" (manufactured by BASF); and the trade name "CIT-1682" (manufactured by Nippon Soda Co., Ltd.) can also be preferably used.

In addition, particularly, examples of the cationic catalysts that generate a cationic species by being subjected to heat treatment include aryldiazonium salts, aryliodonium salts, arylsulfonium salts, and allene-ion complexes, and commercial products such as the trade names "PP-33," "CP-66," and "CP-77" (manufactured by ADEKA); the trade name "FC-509" (manufactured by 3M); the trade name "UVE1014" (manufactured by G.E.); the trade names "SAN-AID SI-60L," "SAN-AID SI-80L," "SAN-AID SI-100L," "SAN-AID SI-110L," and "SAN-AID SI-150L" (manufactured by SANSHIN CHEMICAL INDUSTRY CO., LTD.); and the trade name "CG-24-61" (manufactured by Ciba Japan) can be preferably used. Further, the cationic catalysts may be compounds of chelate compounds of metals such as aluminum and titanium and acetoacetic acid or diketones and silanols such as triphenylsilanol, or compounds of chelate compounds of metals such as aluminum and titanium and acetoacetic acid or diketones and phenols such as bisphenol S.

Especially, as the cationic curing agent (D), hexafluoroantimonate salts of arylsulfoniums (for example, the trade name "SAN-AID SI-150L") are preferred in terms of an excellent curing rate.

The content (blended amount) of the cationic curing agent (D) is not particularly limited but is preferably 0.01 to 15 parts by weight, more preferably 0.01 to 12 parts by weight, further preferably 0.05 to 10 parts by weight, and particularly preferably 0.1 to 10 parts by weight based on 100 parts by weight of the total amount of the compounds having an epoxy group contained in the curable resin composition. By using the cationic curing agent (D) within the above range, a cured product having excellent heat resistance, light resistance, and transparency can be obtained.

### [Radical Polymerization Initiator]

The curable resin composition of the present invention may comprise a radical polymerization initiator. The above radical polymerization initiator is a compound having the function of initiating or accelerating the polymerization reaction of the radical polymerizable compound (A). As the above radical polymerization initiator, known or common radical polymerization initiators can be used, and examples thereof include, but are not particularly limited to, azo polymerization initiators such as azobisisobutyronitrile (AIBN), azobis-2,4-dimethylvaleronitrile, 2,2'-azobis(isobutyric acid)dimethyl, azobiscyclohexanecarbonitrile, and azobiscyanovaleric acid; peroxide-based initiators such as benzoyl peroxide, cumene hydroperoxide, t-dibutyl peroxide, and lauroyl peroxide; and persulfuric acid-based polymerization initiators such as potassium persulfate, sodium persulfate, and ammonium persulfate.

In the curable resin composition of the present invention, one radical polymerization initiator can be used alone, or two or more radical polymerization initiators can be used in combination. As the above radical polymerization initiator, commercial products can also be used.

The content (blended amount) of the radical polymerization initiator in the curable resin composition of the present invention is not particularly limited but is preferably 0.01 to 10 parts by weight, more preferably 0.1 to 5 parts by weight, and further preferably 1 to 3 parts by weight based on 100 parts by weight of the total amount of the radical polymerizable compounds (A). When the content of the radical polymerization initiator is less than 0.01 parts by weight, the progress of the polymerization reaction of the radical polymerizable compound (A) is insufficient, which may adversely affect the physical properties of the cured product. On the other hand, when the content is more than 10 parts by weight, the hue of the cured product may worsen.

### [Another Epoxy Compound]

The curable resin composition of the present invention may comprise an epoxy compound other than the alicyclic epoxy compound (B) (sometimes referred to as "another epoxy compound"). Examples of the above another epoxy compound include aromatic glycidyl ether-based epoxy compounds [for example, bisphenol A type epoxy compounds, bisphenol F type epoxy compounds, biphenol type epoxy compounds, phenol novolac type epoxy compounds, cresol novolac type epoxy compounds, cresol novolac type epoxy compounds of bisphenol A, naphthalene type epoxy compounds, and epoxy compounds obtained from trisphenolmethane], aliphatic glycidyl ether-based epoxy compounds [for example, aliphatic polyglycidyl ethers], glycidyl ester-based epoxy compounds, glycidylamine-based epoxy compounds, and isocyanurate compounds having an epoxy group [for example, diallyl monoglycidyl isocyanurate compounds, monoallyl diglycidyl isocyanurate compounds, and triglycidyl isocyanurate compounds].

In the curable resin composition of the present invention, one of the above another epoxy compound can be used alone, or two or more of the above another epoxy compound can be used in combination. In addition, as the above another epoxy compound, commercial products can also be used.

The content (blended amount) of the above another epoxy compound in the curable resin composition of the present invention is not particularly limited but is preferably 0 to 150 parts by weight, more preferably 0 to 100 parts by weight, based on 100 parts by weight of the alicyclic epoxy compound (B).

### [Additives]

The curable resin composition of the present invention may contain, in addition to the above, various additives within a range that does not impair the effects of the present invention. When, for example, compounds having a hydroxyl group such as ethylene glycol, diethylene glycol, propylene glycol, and glycerin are used as the above additives, the reaction can be allowed to proceed gently. In addition, the curable resin composition of the present invention may comprise common additives such as a silicone-based or fluorine-based antifoaming agent, a leveling agent, a silane coupling agent such as γ-glycidoxypropyltrimethoxysilane or 3-mercaptopropyltrimethoxysilane, a surfactant, an inorganic filler such.as silica or alumina, a flame retardant, a colorant, an antioxidant, an ultraviolet absorbing agent, an ion adsorbent, a pigment, a release agent, and a phosphor within a range that does not impair viscosity or transparency.

The curable resin composition of the present invention can be prepared by stirring and mixing the above-described components in a heated state as required, though not particularly limited. The curable resin composition of the present invention can be used as a one-component composition in which a premix of components is used as it is, or can be used as a multicomponent (for example, two-component) composition in which, for example, two or more separately stored components are mixed in a predetermined proportion before use and used. The method of the above stirring and mixing is not particularly limited, and, for example, known or common stirring and mixing means such as various mixers such as dissolvers and homogenizers, kneaders, rolls, bead mills, and planetary stirring apparatuses can be used. In addition, after the stirring and mixing, defoaming may be performed under vacuum.

### <Cured Product>

By curing the curable resin composition of the present invention, a cured product (sometimes referred to as "the cured product of the present invention") is obtained. The curing (curing reaction) of the curable resin composition of the present invention can be allowed to proceed by heating. The heating temperature in curing (curing temperature) is not particularly limited but is preferably 40 to 250°C, more preferably 50 to 230°C, and further preferably 55 to 210°C. In addition, the time of heating in curing (curing time) is not particularly limited but is preferably 30 to 1200 minutes, more preferably 60 to 900 minutes, and further preferably 120 to 780 minutes. When the curing temperature and the curing time are lower than the lower limit values of the above ranges, the curing is insufficient, and on the contrary, when the curing temperature and the curing time are higher than the upper limit values of the above ranges, the decomposition of the resin components may occur, and therefore, neither is preferred. The curing conditions depend on various conditions but can be appropriately adjusted, for example, by shortening the curing time when the curing temperature is raised, or by lengthening the curing time when the curing temperature is lowered. The curing temperature can be controlled to be constant or can be controlled to fluctuate stepwise or continuously. In addition, the curing can be carried out in one stage or can be carried out in multiple stages, two or more stages.

As described above, by heating the curable resin composition of the present invention, the radical polymerization reaction of the radical polymerizable compound (A) and the reaction of the alicyclic epoxy compound (B) with the acid anhydride (C) or the cationic polymerization reaction of the alicyclic epoxy compound (B) proceed, and the cured product of the present invention that is a composite of a polymer of the radical polymerizable compound (A) and a polymer of the alicyclic epoxy compound (B) is obtained. The cured product of the present invention has excellent toughness derived from the polymer of the radical polymerizable compound (A) while maintaining high heat resistance derived from the polymer of the alicyclic epoxy compound (B). This is presumed to be because the curable resin composition of the present invention has the above-described configuration, and thus, the above cationic polymerization reaction and the above radical polymerization reaction proceed in parallel, and a cured product having a configuration in which the polymer of the radical polymerizable compound (A) is finely dispersed well in the polymer of the alicyclic epoxy compound (B) is obtained. In addition, the curable resin composition of the present invention need not comprise a high molecular weight component, for example, the polymer of the radical polymerizable compound (A), as an essential component and therefore has low viscosity and excellent workability. On the other hand, a cured product obtained by blending the radical polymerizable compound (A) in a state of a previously polymerized polymer with the alicyclic epoxy compound (B) and curing the blend with the acid anhydride (C) or cationically curing the blend has poor toughness, for example, low flexural strength, which is presumed to be because the dispersed state of the polymer of the radical polymerizable compound (A) is bad. In addition, a composition in which the above polymer is blended has high viscosity and also poor workability.

The fracture toughness value (K1c) of the cured product of the present invention is not particularly limited but is preferably not less than 0.60 MN/m^{3/2} (for example, 0.60 to 3.00 MN/m^{3/2}), more preferably not less than 0.62 MN/m^{3/2}. When the fracture toughness value is less than 0.60 MN/m^{3/2}, the toughness of the cured product may be insufficient depending on the application. The fracture toughness value can be measured, for example, by a method described in Examples.

The flexural strength of the cured product of the present invention is not particularly limited but is preferably not less than 90 MPa (for example, 90 to 1000 MPa), more preferably not less than 100 MPa. When the flexural strength is less than 90 MPa, the toughness of the cured product may be insufficient depending on the application. The flexural strength can be measured, for example, by a method described in Examples.

The flexural elongation of the cured product of the present invention is not particularly limited but is preferably not less than 3% (for example, 3 to 100%), more preferably not less than 5%. When the flexural elongation is less than 3%, for example, it is smaller than the elongation of fibers in fiber-reinforced composite material applications, and the required properties may not be satisfied. The flexural elongation can be measured, for example, by a method described in Examples.

The glass transition temperature (Tg) of the cured product of the present invention is not particularly limited but is preferably not less than 180°C (for example, 180 to 400°C), more preferably not less than 190°C. When the glass transition temperature is less than 180°C, the heat resistance of the cured product may be insufficient depending on the application. The glass transition temperature can be measured by thermal analysis (TGA, DSC, or the like) or dynamic viscoelasticity measurement, and specifically, for example, a method described in Examples.

The 5% weight decrease temperature (Td₅) [in a nitrogen atmosphere] of the cured product of the present invention is not particularly limited but is preferably not less than 200°C (for example, 200 to 500°C), more preferably not less than 220°C. When the 5% weight decrease temperature is less than 200°C, the heat resistance of the cured product may be insufficient depending on the application. The 5% weight decrease temperature can be measured by thermogravimetric analysis (TGA), and specifically, for example, a method described in Examples.

The 10% weight decrease temperature (Td₁₀) [in a nitrogen atmosphere] of the cured product of the present invention is not particularly limited but is preferably not less than 300°C (for example, 300 to 550°C), more preferably not less than 320°C. When the 10% weight decrease temperature is less than 300°C, the heat resistance of the cured product may be insufficient depending on the application. The 10% weight decrease temperature can be measured by thermogravimetric analysis (TGA), and specifically, for example, a method described in Examples.

The curable resin composition of the present invention can be used in wide applications such as adhesives; paints; inks; various electrical and electronic materials such as electrical insulating materials, laminates, and sealing materials for semiconductor devices; various optical materials such as resists, transparent base materials, transparent sheets, transparent films, optical devices, optical lenses, optical members, stereolithography, electronic paper, touch panels, solar cell substrates, optical waveguides, light guide plates, holographic memories, and sealing materials for optical semiconductor devices; and various structural materials such as sealants and structural materials. Particularly, when the curable resin composition of the present invention is a resin composition comprising the radical polymerizable compound (A), the alicyclic epoxy compound (B), and the cationic curing agent (D) as essential components, it can be relatively rapidly cured to form a cured product, and therefore, it can be preferably used particularly in structural material applications such as fiber-reinforced composite materials (including carbon fiber-reinforced resins (CFRP), glass fiber-reinforced resins (GFRP), aramid fiber-reinforced resins, and the like) of which high productivity is required. The structural material applications include, for example, applications such as automobile members, aircraft members, aerospace members, window-generating members, pressure containers, syntactic foams, drilling pipes, oil well pipes (including tubing, casings, those for lines, and the like), and other pipes.

In addition, the curable resin composition of the present invention can also be preferably used as a sizing agent (particularly a sizing agent for carbon fibers). The sizing agent is a treating agent applied (coated) to reinforcing fibers in order to improve handling properties in a reinforcing fiber manufacturing process and higher-order processing steps (a woven fabric step, a prepreg step, and other forming steps) and is sometimes referred to as a size.

### Examples

The present invention will be described in more detail below based on Examples, but the present invention is not limited by these Examples.

### <Cured Product Evaluation Methods>

### • Flexural Strength, Flexural Modulus, and Flexural Elongation

A three-point flexural test was performed under the conditions of a distance between supporting points of 20 mm and a flexural rate of 2 mm/min using a 2 mm x 10 mm x 41.5 mm cured product as a sample and using Autograph ("AGS-500B," manufactured by SHIMADZU CORPORATION) to measure the flexural strength, flexural modulus, and flexural elongation of the cured product.

### • Fracture Toughness Value (K1c)

Using a 7 mm x 14 mm x 83 mm cured product as a sample and using Autograph ("AGS-500B," manufactured by SHIMADZU CORPORATION), the fracture toughness value (K1c) of the cured product was measured according to ASTM E399.

### • Glass Transition Temperature (Tg)

Using a dynamic viscoelasticity measurement (DMA) apparatus ("DMS-6100," manufactured by SII NANOTECHNOLOGY INC.), the glass transition temperature of a cured product was measured under the conditions of a temperature rise rate of 5°C/min and a frequency of 1 Hz.

### • 5% Weight Decrease Temperature (Td₅) and 10% Weight Decrease Temperature (Td₁₀)

Using a thermogravimetric analyzer (TGA) ("EXSTAR6000 TG/DTA6200," manufactured by SII NANOTECHNOLOGY INC.), the 5% weight decrease temperature and 10% weight decrease temperature of a cured product were measured in a nitrogen atmosphere under the condition of a temperature rise rate of 10°C/min.

### Example 1

48.28 parts by weight of hydrogenated methylnadic anhydride (H-NMA, acid anhydride equivalent: 177) and 6.24 parts by weight of N-phenylmaleimide (PMI) were added to 41.72 parts by weight of an alicyclic epoxy compound (trade name "CELLOXIDE 2021P," manufactured by Daicel Corporation, epoxy equivalent: 130), they were melted and mixed at 40°C, then 3.76 parts by weight of styrene (St), 0.42 parts by weight of 1,8-diazabicyclo[5.4.0]undecene-7·octylate (DBU salt), and 0.17 parts by weight of benzoyl peroxide were added, and the mixture was stirred at 40°C for 20 minutes to obtain a curable resin composition (curable composition). Then, the curable resin composition obtained above was poured into a silicone casting plate, the temperature was raised, and the curable resin composition was heated and cured at 90°C for 2 hours, then at 120°C for 2 hours, at 150°C for 3 hours, and at 170°C for 3 hours to obtain a cured product (cured product sample). The composition of the curable resin composition and the evaluation results of cured product physical properties are shown in Table 1.

In Table 1, the amount of N-phenylmaleimide and styrene blended in Examples 1 to 4 is shown as an amount in terms of a polymer (PMS: N-phenylmaleimide-styrene copolymer) obtained by polymerization.

### Example 2

A curable resin composition and a cured product (cured product sample) were obtained as in Example 1 except that the curing conditions were changed to the conditions of heating at 90°C for 2 hours, then at 120°C for 2 hours, at 150°C for 3 hours, at 170°C for 3 hours, and at 200°C for 2 hours. The composition of the curable resin composition and the evaluation results of cured product physical properties are shown in Table 1.

### Example 3

6.24 parts by weight of N-phenylmaleimide (PMI) was added to 90 parts by weight of an alicyclic epoxy compound (trade name "CELLOXIDE 2021P," manufactured by Daicel Corporation, epoxy equivalent: 130), they were melted and mixed at 60°C for 1 hour, and then 3.76 parts by weight of styrene (St) and 0.17 parts by weight of benzoyl peroxide were added. The blend obtained in this manner was allowed to cool to room temperature, then 0.54 parts by weight of the trade name "SAN-AID SI-150L" (manufactured by SANSHIN CHEMICAL INDUSTRY CO., LTD.) was further added, and the mixture was stirred to obtain a curable resin composition. Then, the curable resin composition obtained above was poured into a silicone casting plate, the temperature was raised, and the curable resin composition was heated and cured at 80°C for 2 hours, then at 110°C for 2 hours, and at 200°C for 1 hour to obtain a cured product (cured product sample). The composition of the curable resin composition and the evaluation results of cured product physical properties are shown in Table 1.

### Example 4

46.65 parts by weight of hydrogenated methylnadic anhydride (H-NMA, acid anhydride equivalent: 177) and 6.24 parts by weight of N-phenylmaleimide (PMI) were added to 34.68 parts by weight of an alicyclic epoxy compound (trade name "CELLOXIDE 2021P," manufactured by Daicel Corporation, epoxy equivalent: 130) and 8.67 parts by weight of a flexible alicyclic epoxy compound (trade name "CELLOXIDE 2081," manufactured by Daicel Corporation, epoxy equivalent: 200), they were melted and mixed at 40°C, then 3.76 parts by weight of styrene (St), 0.35 parts by weight of 1,8-diazabicyclo[5.4.0]undecene-7·octylate, and 0.17 parts by weight of benzoyl peroxide were added, and the mixture was stirred at 40°C for 20 minutes to obtain a curable resin composition. Then, the curable resin composition obtained above was poured into a silicone casting plate, the temperature was raised, and the curable resin composition was heated and cured at 90°C for 2 hours, then at 120°C for 2 hours, at 150°C for 3 hours, at 170°C for 3 hours, and at 200°C for 2 hours to obtain a cured product (cured product sample). The composition of the curable resin composition and the evaluation results of cured product physical properties are shown in Table 1.

### Example 5

A curable resin composition and a cured product (cured product sample) were obtained as in Example 3 except that instead of adding 3.76 parts by weight of styrene (St) and 0.17 parts by weight of benzoyl peroxide, 3.76 parts by weight of styrene (St), 1 mol% divinylbenzene based on the total amount (100 mol%) of styrene, N-phenylmaleimide, and divinylbenzene used, and 0.17 parts by weight of benzoyl peroxide were added. The composition of the curable resin composition and the evaluation results of cured product physical properties are shown in Table 1.

In Table 1, the amount of N-phenylmaleimide, styrene, and divinylbenzene blended in Example 5 is shown as an amount in terms of a polymer (PMS: N-phenylmaleimide-styrenedivinylbenzene copolymer) obtained by polymerization (about 10 parts by weight; described as 10 parts by weight in Table 1).

### Comparative Example 1

53.64 parts by weight of hydrogenated methylnadic anhydride (H-NMA, acid anhydride equivalent: 177) and 0.46 parts by weight of 1,8-diazabicyclo[5.4.0]undecene-7·octylate were added to 46.36 parts by weight of an alicyclic epoxy compound (trade name "CELLOXIDE 2021P," manufactured by Daicel Corporation, epoxy equivalent: 130), and they were stirred at room temperature for 10 minutes to obtain a curable resin composition. Then, the curable resin composition obtained above was poured into a silicone casting plate, the temperature was raised, and the curable resin composition was heated and cured at 90°C for 2 hours, then at 120°C for 2 hours, at 150°C for 3 hours, and at 170°C for 3 hours to obtain a cured product (cured product sample). The composition of the curable resin composition and the evaluation results of cured product physical properties are shown in Table 1.

### Comparative Example 2

A curable resin composition and a cured product (cured product sample) were obtained as in Comparative Example 1 except that the curing conditions were changed to the conditions of heating at 90°C for 2 hours, then at 120°C for 2 hours, at 150°C for 3 hours, at 170°C for 3 hours, and at 200°C for 2 hours. The composition of the curable resin composition and the evaluation results of cured product physical properties are shown in Table 1.

### Comparative Example 3

35.86 parts by weight of N-phenylmaleimide (PMI), 0.68 parts by weight of azobisisobutyronitrile (AIBN), and 323 parts by weight of acetone were blended with 21.57 parts by weight of styrene, and a reaction (polymerization reaction) was performed at 60°C for 18 hours. The obtained reaction solution was dissolved in tetrahydrofuran (THF) at 60°C, and the solution was returned to room temperature followed by reprecipitation with methanol, filtration, and drying (40°C).

44.04 parts by weight of an alicyclic epoxy compound (trade name "CELLOXIDE 2021P," manufactured by Daicel Corporation, epoxy equivalent: 130) was added to 5 parts by weight of a N-phenylmaleimide-styrene alternating copolymer (PMS) obtained in this manner, they were melted and mixed at 100°C, then the mixture was degassed at 60°C for 1 hour, 50.96 parts by weight of hydrogenated methylnadic anhydride (H-NMA, acid anhydride equivalent: 177) and 0.44 parts by weight of 1,8-diazabicyclo[5.4.0]undecene-7·octylate were added, and the mixture was stirred at room temperature for 30 minutes to obtain a curable resin composition. Then, the curable resin composition obtained above was poured into a silicone casting plate, the temperature was raised, and the curable resin composition was heated and cured at 90°C for 2 hours, then at 120°C for 2 hours, at 150°C for 3 hours, and at 170°C for 3 hours to obtain a cured product (cured product sample). The composition of the curable resin composition and the evaluation results of cured product physical properties are shown in Table 1.

### Comparative Example 4

44.19 parts by weight of hydrogenated methylnadic anhydride (H-NMA, acid anhydride equivalent: 177) and 0.56 parts by weight of 1,8-diazabicyclo[5.4.0]undecene-7·octylate were added to 55.81 parts by weight of a bisphenol A type epoxy resin (trade name "jER828" (DGEBA), manufactured by Mitsubishi Chemical Corporation, epoxy equivalent: 190), and they were stirred at room temperature for 10 minutes to obtain a curable resin composition. Then, the curable resin composition obtained above was poured into a silicone casting plate, the temperature was raised, and the curable resin composition was heated and cured at 85°C for 5 hours and then at 150°C for 15 hours to obtain a cured product (cured product sample). The composition of the curable resin composition and the evaluation results of cured product physical properties are shown in Table 1.

### Comparative Example 5

0.6 parts by weight of the trade name "SAN-AID SI-150" (manufactured by SANSHIN CHEMICAL INDUSTRY CO., LTD.) was added to 100 parts by weight of an alicyclic epoxy compound (trade name "CELLOXIDE 2021P," manufactured by Daicel Corporation, epoxy equivalent: 130), and they were stirred to obtain a curable resin composition. Then, the curable resin composition obtained above was poured into a silicone casting plate, the temperature was raised, and the curable resin composition was heated and cured at 110°C for 2 hours and then at 200°C for 1 hour to obtain a cured product (cured product sample). The composition of the curable resin composition and the evaluation results of cured product physical properties are shown in Table 1.

### Comparative Example 6

51.84 parts by weight of hydrogenated methylnadic anhydride (H-NMA, acid anhydride equivalent: 177) and 0.39 parts by weight of 1,8-diazabicyclo[5.4.0]undecene-7(DBU)·octylate were added to 38.53 parts by weight of an alicyclic epoxy compound (trade name "CELLOXIDE 2021P," manufactured by Daicel Corporation, epoxy equivalent: 130) and 9.63 parts by weight of a flexible alicyclic epoxy compound (trade name "CELLOXIDE 2081," manufactured by Daicel Corporation, epoxy equivalent: 200), and they were stirred at room temperature for 20 minutes to obtain a curable resin composition. Then, the curable resin composition obtained above was poured into a silicone casting plate, the temperature was raised, and the curable resin composition was heated and cured at 90°C for 2 hours, then at 120°C for 2 hours, at 150°C for 3 hours, at 170°C for 3 hours, and at 200°C for 2 hours to obtain a cured product (cured product sample). The composition of the curable resin composition and the evaluation results of cured product physical properties are shown in Table 1.
[Table 1]

**(Table 1)**

| | Curable resin composition | | | | | | | | Cured product physical properties | | | | | | |
|---|---|---|---|---|---|---|---|---|---|---|---|---|---|---|---|
| | CELLOXIDE 2021P | CELLOXIDE 2081 | jER828 | H-NMA | DBU salt | SI-150L | PMS | BPO | K1c | Flexural properties | | | Tg | Td₅ | Td₁₀ |
| | (Parts by weight) | (Parts by weight) | (Parts by weight) | (Parts by weight) | (Parts by weight) | (Parts by weight) | (Parts by weight) | (Parts by weight) | (MN/m^{3/2}) | Strength (MPa) | Modulus (GPa) | Elongation (%) | (°C) | (°C) | (°C) |
| Example 1 | 41.72 | - | - | 48.28 | 0.42 | - | 10(monomers) ^{*1} | 0.17 | 0.65 | 145 | 3.80 | 6.0 | 202 | 229 | 326 |
| Example 2 | 41.72 | - | - | 48.28 | 0.42 | - | 10(monomers) ^{*1} | 0.17 | 0.71 | 138 | 3.55 | 6.0 | 226 | 248 | 331 |
| Example 3 | 90.00 | - | - | - | - | 0.54 | 10(monomers) ^{*1} | 0.17 | 0.63 | 142 | 3.43 | 7.1 | 195 | 302 | 355 |
| Example 4 | 34.68 | 8.67 | - | 46.65 | 0.35 | - | 10(monomers) ^{*1} | 0.17 | 0.75 | 104 | 3.19 | 6.1 | 211 | 327 | 343 |
| Example 5 | 90.00 | - | - | - | - | 0.54 | 10(monomers) ^{*2} | 0.17 | 0.63 | 108 | 3.08 | 5.4 | 213 | - | - |
| Comparative Example 1 | 46.36 | - | - | 53.64 | 0.46 | - | - | - | 0.56 | 140 | 3.22 | 7.1 | 256 | 315 | 336 |
| Comparative Example 2 | 46.36 | - | - | 53.64 | 0.46 | - | - | - | 0.44 | 144 | 3.30 | 7.0 | 274 | 326 | 345 |
| Comparative Example 3 | 44.04 | - | - | 50.96 | 0.44 | - | 5(polymer) | - | 0.76 | 55 | 3.33 | 2.6 | 230 | 242 | 325 |
| Comparative Example 4 | - | - | 55.81 | 44.19 | 0.56 | - | - | - | 0.59 | 144 | 3.05 | 18.2 | 139 | - | - |
| Comparative Example 5 | 100 | - | - | - | - | 0.6 | - | - | 0.38 | 120 | 3.39 | 5.7 | 181 | 302 | 354 |
| Comparative Example 6 | 38.53 | 9.63 | - | 51.84 | 0.39 | - | - | - | 0.52 | 163 | 2.94 | 11 | 231 | 329 | 341 |

| | | | | | | | | | | | | | | | |
|---|---|---|---|---|---|---|---|---|---|---|---|---|---|---|---|
| *1) N-phenylmaleimide and styrene *2) N-phenylmaleimide, styrene, and divinylbenzene | | | | | | | | | | | | | | | |

As shown in Table 1, the cured products obtained by curing the curable resin compositions obtained in the Examples (the curable resin compositions of the present invention) had a high fracture toughness value (K1c) and high flexural strength and were tough and also had high heat resistance. On the other hand, the cured products obtained in the Comparative Examples had a low fracture toughness value or low flexural strength and poor toughness. In addition, some of the cured products obtained in the Comparative Examples had low heat resistance.

In addition, it was confirmed that in a case where as radical polymerizable compounds, monofunctional ones and a polyfunctional (bifunctional) one were used in combination (Example 5), the heat resistance was even more improved while the excellent transparency and toughness of the obtained cured product were maintained, compared with a case where as radical polymerizable compounds, only monofunctional ones were used (Example 3).

The meanings of the abbreviations shown in Table 1 are as follows.
CELLOXIDE 2021P: the trade name "CELLOXIDE 2021P," manufactured by Daicel Corporation
CELLOXIDE 2081: the trade name "CELLOXIDE 2081," manufactured by Daicel Corporation
jER828: the trade name "jER828," manufactured by Mitsubishi Chemical Corporation
H-NMA: hydrogenated methylnadic anhydride
DBU salt: 1,8-diazabicyclo[5.4.0]undecene-7·octylate
SI-150L: the trade name "SAN-AID SI-150L," manufactured by SANSHIN CHEMICAL INDUSTRY CO., LTD.
PMS: N-phenylmaleimide and styrene (monomers); N-phenylmaleimide, styrene, and divinylbenzene (monomers); or a N-phenylmaleimide-styrene alternating copolymer (polymer)
BPO: benzoyl peroxide

### Industrial Applicability

The curable resin composition of the present invention can be used in wide applications such as adhesives; paints; inks; various electrical and electronic materials such as electrical insulating materials, laminates, and sealing materials for semiconductor devices; various optical materials such as resists, transparent base materials, transparent sheets, transparent films, optical devices, optical lenses, optical members, stereolithography, electronic paper, touch panels, solar cell substrates, optical waveguides, light guide plates, holographic memories, and sealing materials for optical semiconductor devices; and various structural materials such as sealants and structural materials (fiber-reinforced composite materials such as carbon fiber-reinforced resins (CFRP), glass fiber-reinforced resins (GFRP), and aramid fiber-reinforced resins, and the like).

## Claims

1. A curable resin composition comprising radical polymerizable compounds (A), an alicyclic epoxy compound (B), and a cationic curing agent (D),
wherein the curable resin composition comprises, as the radical polymerizable compounds (A), a compound represented by the following formula (a1): 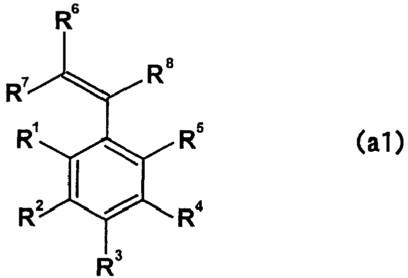 wherein R¹ to R⁵ identically or differently represent a hydrogen atom, a halogen atom, a monovalent organic group, a monovalent oxygen atom-containing group, a monovalent nitrogen atom-containing group, or a monovalent sulfur atom-containing group; two or more selected from R¹ to R⁵ may be bonded to each other to form a ring together with carbon atoms constituting an aromatic ring shown in the formula; and R⁶ to R⁸ identically or differently represent a hydrogen atom, a halogen atom, or an alkyl group, and a compound represented by the following formula (a2) : 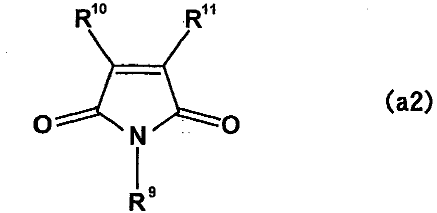 wherein R⁹ identically or differently represents a hydrogen atom, a halogen atom, a monovalent organic group, a monovalent oxygen atom-containing group, a monovalent nitrogen atom-containing group, or a monovalent sulfur atom-containing group; R¹⁰ and R¹¹ identically or differently represent a hydrogen atom, a halogen atom, a monovalent organic group, a monovalent oxygen atom-containing group, a monovalent nitrogen atom-containing group, or a monovalent sulfur atom-containing group; and R¹⁰ and R¹¹ may be bonded to each other to form a ring together with carbon atoms shown in the formula.

2. The curable resin composition according to claim 1 comprising, as the alicyclic epoxy compound (B), a compound represented by the following formula (b1): 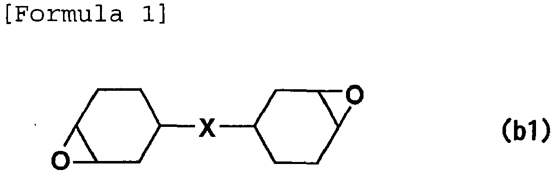 wherein X represents a single bond or a linking group (a divalent group comprising one or more atoms).

3. The curable resin composition according to claim 1 or 2 comprising, as the radical polymerizable compounds (A), a compound in which R¹ to R⁵ in formula (a1) are each a group having no radical polymerizable functional group, and a compound in which at least one of R¹ to R⁵ in formula (a1) is a vinyl group.

4. The curable resin composition according to any one of claims 1 to 3 further comprising a radical polymerization initiator.

5. A cured product obtained by curing the curable resin composition according to any one of claims 1 to 4.
